**Europäisches Patentamt**

(19) **European Patent Office**

**Office européen des brevets**

(11) Numéro de publication: **0 077 241**
**B1**

(12) **FASCICULE DE BREVET EUROPEEN**

(45) Date de publication du fascicule du brevet:
06.02.85

(51) Int. Cl.⁴: **B 29 C 39/36**, B 29 D 17/00

(21) Numéro de dépôt: **82401759.4**

(22) Date de dépôt: **28.09.82**

(54) **Procédé de démoulage de disque porteur d'informations, et dispositif mettant en oeuvre un tel procédé.**

(30) Priorité: **06.10.81 FR 8118788**

(43) Date de publication de la demande:
**20.04.83 Bulletin 83/16**

(45) Mention de la délivrance du brevet:
**06.02.85 Bulletin 85/6**

(84) Etats contractants désignés:
**DE GB IT NL SE**

(56) Documents cités:
**BE - A - 661 132**
**DE - A - 1 504 974**
**DE - A - 1 629 686**
**FR - A - 1 194 131**

(73) Titulaire: **THOMSON-CSF, 173, Boulevard Haussmann,
F-75379 Paris Cedex 08 (FR)**

(72) Inventeur: **Rascle, Roger, THOMSON-CSF SCPI 173, bld
Haussmann, F-75379 Paris Cedex 08 (FR)**
Inventeur: **Lange, François, THOMSON-CSF
SCPI 173, bld Haussmann, F-75379 Paris Cedex 08 (FR)**

(74) Mandataire: **Lepercque, Jean et al, THOMSON-CSF
SCPI 173, Bld Haussmann, F-75379 Paris Cedex 08 (FR)**

## Description

L'invention concerne le démoulage d'un disque moulé sur une matrice porteuse d'informations sous la forme de microreliefs.

Sur un tel disque, les informations sont généralement enregistrées selon une piste en spirale ou en forme de cercles concentriques formée d'une succession d'éléments dont les dimensions peuvent être de l'ordre du micron: cuvettes ou saillies selon le cas. Un procédé de réalisation d'un tel disque est décrit dans la demande de brevet européen N° 80.401 241 7 déposée le 29 août 1980 et publiée sous le N° EP-A 0025387.

Pour certaines applications, il peut être utile de disposer d'un nombre plus ou moins important de copies identiques obtenues à partir d'un même disque original: soit une matrice spécialement gravée et qui ne servira qu'à la duplication, soit un disque susceptible d'être enregistré et lu par l'utilisateur.

De nombreux procédés de copie sont déjà connus, notamment ceux faisant appel aux techniques de pressage, telles que celles utilisées pour les disques audio, qui nécessitent l'emploi pour les copies d'un matériau plastique thermodéformable. Les procédés de pressage bien adaptés à la production en série nécessitent un appareillage lourd, encombrant et coûteux.

Plus adaptés à la production sont les procédés de moulage consistant à mettre en contact une matrice et un substrat avec au moins un agent moulant intermédiaire. L'appareillage est alors plus léger, de mise en œuvre simple et de faible prix de revient, pouvant être installé dans un local quelconque, tel un appareil de reprographie par exemple, sur les lieux mêmes de l'utilisation. D'autre part, le moulage n'engendre pas de contraintes mécaniques au niveau de l'empreinte en relief et assure une meilleure fidélité de reproduction que le pressage. Mais l'un des problèmes rencontrés est celui du démoulage du disque ainsi obtenu.

Les procédés de l'art connu permettent d'obtenir ce résultat en agissant par traction sur le disque.

L'effort nécessaire à ce démoulage crée des contraintes dans le disque et des déformations du disque qui sont dans certains cas préjudiciables à la gravure; cela conduit à l'étude d'un procédé de démoulage mieux adapté, limitant les risques d'endommagement de la piste, donc préservant les informations stockées.

L'invention a pour objet un procédé de démoulage de disque porteur d'informations sous la forme de microreliefs superficiels, ce disque étant obtenu par moulage à la surface d'une matrice gravée; ce procédé étant caractérisé en ce qu'un gaz est injecté entre ce disque et cette matrice gravée entraînant le décollement du disque par rapport à cette matrice, le disque étant maintenu en contact avec la matrice gravée concentriquement de part et d'autre de la zone gravée.

Elle a également pour objet un dispositif mettant en œuvre ce procédé.

D'autres caractéristiques et avantages de l'invention apparaîtront mieux à l'aide de la description ci-après et des dessins qui l'accompagnent où:

la fig. 1 illustre un procédé de l'art connu;

les fig. 2 à 7 illustrent divers aspects particuliers du procédé de l'invention;

la fig. 8 illustre le procédé de l'invention.

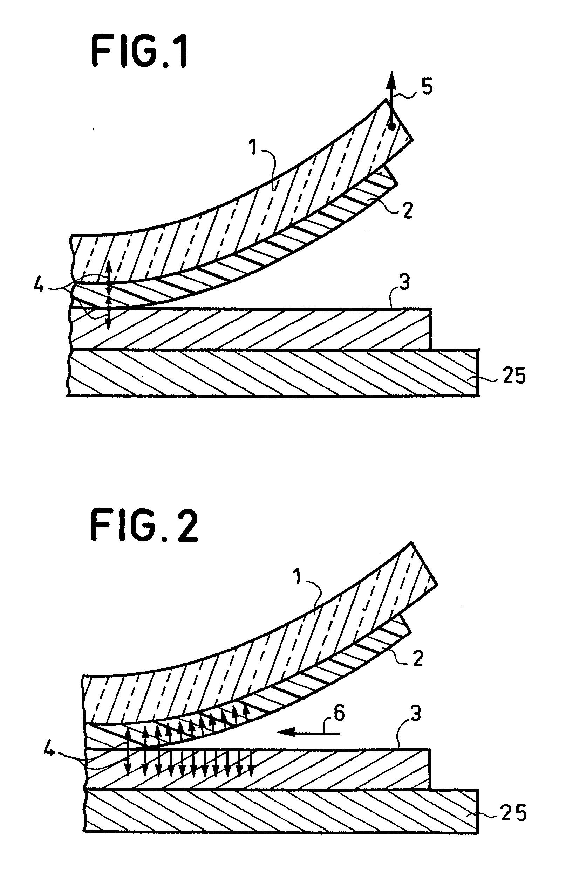

Comme représenté en fig. 1, les procédés de l'art connu permettent d'obtenir le décollement du disque en agissant à l'aide d'une force de traction 5 sur celui-ci perpendiculaire à la surface de la matrice. Dans le cas de la fig. 1, le disque 1 a été moulé sur la matrice 3 grâce à un agent moulant 2 intermédiaire, par exemple de la résine que l'on a durcie. Les flèches 4 représentent l'effort de décollement du disque 1 et de l'agent moulant 2 par rapport à la matrice 3. Le disque peut être, par exemple, réalisé en plexiglas et la matrice en un métal tel que le nickel. Dans le cas de la fig. 1 il y a nécessité de maintenir la matrice pendant le démoulage.

Tels qu'ils sont décrits dans la demande de brevet précitée, moulage et démoulage se font par l'intermédiaire d'une couronne circulaire soutenant le disque par sa périphérie: lors du moulage pendant que le presseur applique progressivement le disque sur la matrice et lors du démoulage lorsque la matrice étant maintenue sur le plateau, la couronne remonte en position originale, soulevant le disque et agissant à la manière d'un dévêtisseur.

Le démoulage par un tel procédé appelle plusieurs remarques:

— La force de décollement est liée à la flexibilité du disque; en effet, l'effort de démoulage est limité par la flexion que peut supporter le disque avant rupture ou avant que sa déformation ne l'endommage.

— Le fait de démouler le disque engendre, dans la zone de décollement, en plus des contraintes utiles perpendiculaires au plan du disque et nécessaires au démoulage, des contraintes parasites pouvant entraîner une détérioration de la gravure. En particulier, la face du disque côté gravure étant tendue, il apparaît des contraintes tangentielles entre disque et matrice ayant tendance à cisailler le relief.

— La force nécessaire au décollement varie en cours de démoulage en fonction du bras de levier et de la longueur de la ligne en cours de décollement. Si la force de traction du disque est constante, on constate des variations importantes de la vitesse de décollement et notamment en fin de démoulage lorsque toute l'énergie emmagasinée dans le disque déformé se libère, ce qui augmente les risques de détérioration de la gravure.

— Le point d'appui sur le disque est éloigné du point de décollement. Il peut y avoir glissement du disque par rapport à la matrice, ce qui peut cisailler la gravure. Ce phénomène est particulièrement important en fin de démoulage alors que seulement quelques millimètres carrés de gravure sont encore en contact.

Le procédé de l'invention permet d'atteindre un effort de décollement très important qui n'aurait pu être obtenu par un autre procédé. En particulier, la force de décollement n'est plus liée à la flexibilité du disque.

Ce procédé permet donc le démoulage de disques très souples.

Dans le cas d'utilisation de disques moulés sur une matrice grâce à un agent moulant intermédiaire, il permet le démoulage même dans le cas de faible adhérence de cet agent moulant sur le disque.

De plus, il n'y a plus lors du démoulage risque de glissement dangereux pour la gravure.

Le procédé de l'invention consiste à injecter entre disque 1 et matrice 3 un jet gazeux 6 qui entraîne le décollement comme représenté en fig. 2. On pourra utiliser de l'air comprimé, de l'azote ou tout autre gaz.

Dans ce type de démoulage, en conjuguant pression et débit, on peut atteindre un effort de décollement très important qui n'aurait pu être obtenu par une autre méthode. En particulier, la force de décollement n'est plus liée à la flexibilité du disque 1.

Ce procédé permet donc le démoulage de disques très souples; il reste bien entendu très adapté aux disques flexibles en général et aux disques rigides. Un intérêt de ce procédé de démoulage qui est particulièrement important dans le cas des disques moulés sur une matrice 3 grâce à un agent moulant 2 intermédiaire, par exemple de la résine que l'on a durcie, est que le jet gazeux 6 s'insinue entre l'agent moulant 2 et la matrice 3, prenant appui sur eux et permettant ainsi le démoulage même dans le cas de faible adhérence de l'agent moulant 2 sur le disque 1. Par contre lors d'un démoulage par traction du disque, l'agent moulant 2 subit lui-même une traction qui tend à le décoller du disque 1 comme représenté en fig. 1.

Dans cette figure et dans les figures suivantes la matrice 3 repose sur un plateau 25 qui lui sert d'assise. Dans le procédé de démoulage de l'invention, il n'y a plus à maintenir la matrice.

Dans ce procédé de l'invention, le gaz injecté 6 prend appui sur le disque 1 ou sur l'agent moulant 2 comme à la fig. 2 et sur la matrice 3 au point de décollement. Il n'y a plus comme précédemment de risque de glissement dangereux pour la gravure.

Il y a lieu de noter que le décollement ne se produit que lorsque la pression entre le disque et la matrice reste à une valeur suffisante, par exemple avec une pression de l'ordre de 1 bar. Le décollement, atteignant la périphérie du disque sur une portion seulement du périmètre, laisse échapper le gaz, ce qui fait chuter la pression et ralentir ou stopper le processus de démoulage.

Ce phénomène est fréquent, le démoulage étant le plus souvent dissymétrique.

Dans la suite des figures l'agent moulant 2 n'a pas été représenté, mais la description correspondante est tout aussi valable pour un démoulage en présence de cet agent moulant 2.

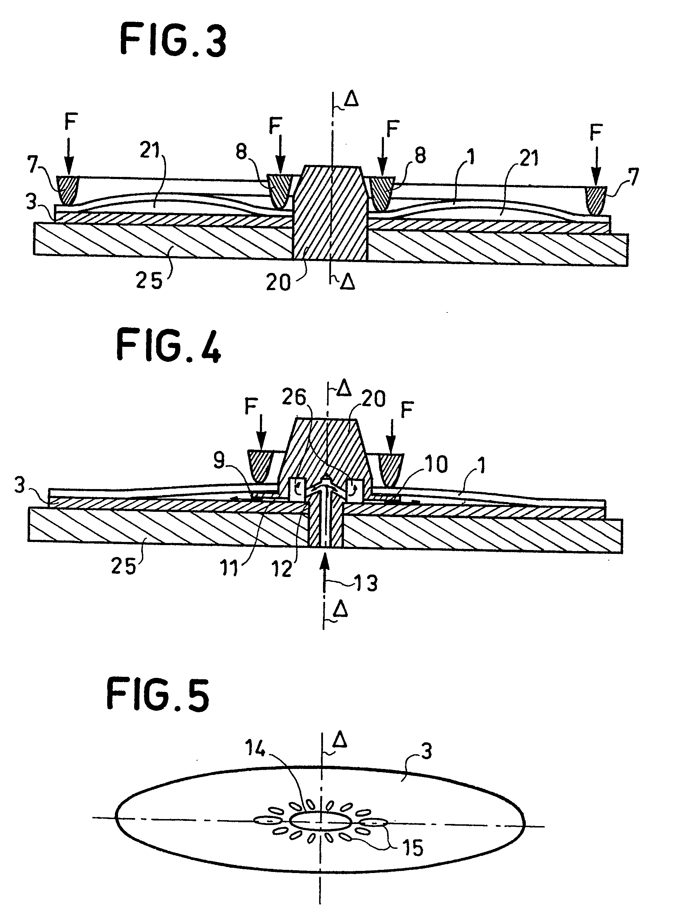

On peut pallier cet inconvénient en assurant l'étanchéité disque/matrice à la périphérie du disque ainsi que près du nez de centrage servant à positionner le disque et la matrice. Une solution représentée à la fig. 3 consiste à appuyer fortement sur le disque 1 à l'endroit où l'on veut assurer l'étanchéité, par exemple en exerçant une force F sur des anneaux 7 et 8 placés concentriquement de part et d'autre de la zone gravée à démouler, Δ étant l'axe de symétrie, 20 le nez de centrage du disque, et 21 représentant la poche dans laquelle le gaz a été injecté.

Ces anneaux 7 et 8 peuvent être, par exemple, des joints toriques en matériaux élastiques. Ils permettent de réaliser une couronne d'appui sur le disque 1 pour le maintenir en contact avec la matrice 3. La force d'appui sur ces anneaux peut être par exemple de l'ordre de quelques décanewtons.

L'injection pourra se faire de différentes façons, par exemple par une buse située en périphérie du disque; une collerette en forme de couronne ayant été préalablement introduite entre le disque et la matrice, cette collerette comportant une buse d'arrivée de gaz, cette injection peut se faire aussi par une buse traversant la matrice ou le disque dans une partie non gravée, ou encore par le nez de centrage aménagé à cet effet. On peut utiliser plusieurs points d'injection et on peut également, par le choix judicieux du ou des points d'injection, créer une direction de démoulage préférentielle, par exemple de la périphérie du disque vers son centre.

La fig. 4 montre un exemple de démoulage par le nez de centrage.

Dans cet exemple le nez de centrage 20 possède une collerette 10 intercalée au moment du moulage entre le disque 1 et la matrice 3.

Des rainures 11 sont ménagées dans cette collerette 10 pour permettre le passage du gaz. Elle joue le rôle d'une buse d'injection de gaz. Le léger écartement du disque et de la matrice dû à l'épaisseur de la collerette facilite le passage du gaz vers la zone à démouler.

Il y a étanchéité entre le disque 1 et le nez de centrage 20 en 9 et entre la matrice 3 et ce nez de centrage 20 en 12. Les chambres 26 représentent des réservoirs qui permettent d'équilibrer la pression du gaz injecté.

Cette figure montre le disque 1 déformé, le nez 20 assurant le centrage du disque 1. En fait un centreur avec une collerette de deux dixièmes de millimètre d'épaisseur et comprenant huit rainures d'un dixième de millimètre de profondeur a donné satisfaction. Les dimensions modestes de cette collerette n'ont pas perturbé le moulage du disque.

Bien entendu, cette collerette 10 peut être rapportée, elle peut être encastrée dans la matrice 3 ou dans le disque 1; disque 1 et matrice 3 peuvent comporter d'origine des stries ou autre forme permettant l'injection. La fig. 5 illustre un exemple d'embouti d'une matrice 3 facilitant le passage du gaz et l'amorçage du processus du démoulage; 14 étant le trou de centrage, Δ l'axe de symétrie et 15 des bossages sur lesquels viendra reposer le disque 1, qui servent d'entretoises entre le disque 1 et la matrice 3 en laissant passer le gaz.

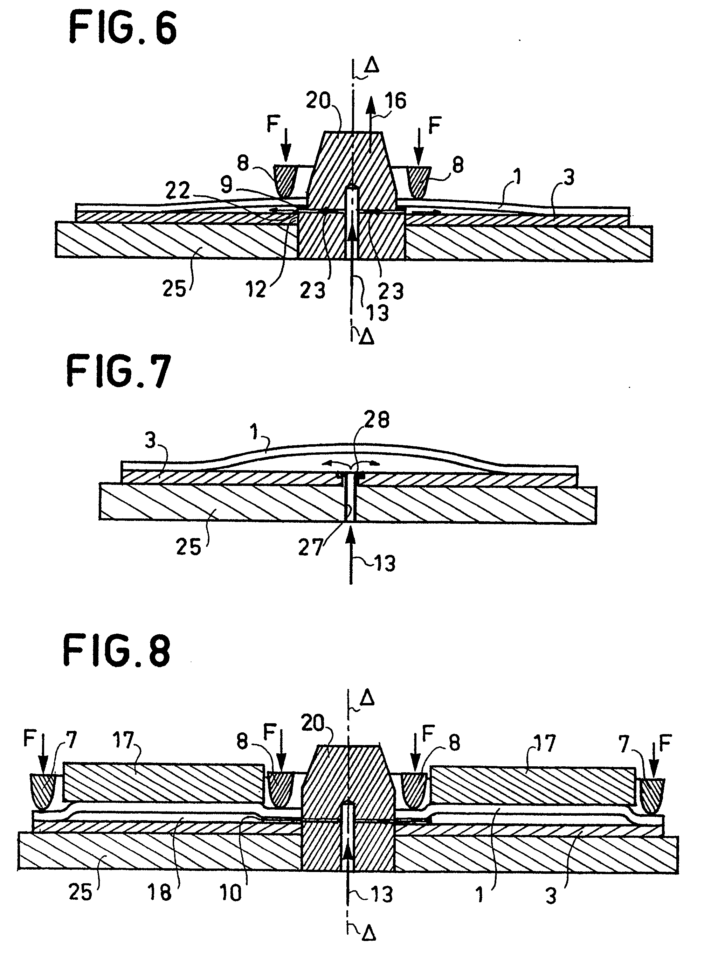

La fig. 6 illustre un autre exemple d'injection de gaz 13 par le nez de centrage 20. Dans cet exemple, le nez 20 a un mouvement de translation 16 dans la direction de l'axe de symétrie Δ, juste avant le démoulage, afin de dégager les buses d'injection 22 et de soulever légèrement le disque 1 pour faciliter le passage du gaz 23.

La fig. 7 illustre un exemple d'injection de gaz 13 à travers la matrice 3 dans une partie en dehors de la gravure. 27 représente un petit tube avec une collerette qui est plaquée sur la matrice 3 par la pression du gaz.

Il faut remarquer, notamment dans le cas de disque flexible, que le disque a tendance à se gonfler sous l'action de la pression. La déformation résultante induit des contraintes dans le disque au point de décollement.

Il faut donc, pour ne pas retomber dans l'inconvénient des systèmes dits par traction du disque, limiter cette déformation.

Pour cela on peut, par exemple, placer un plateau 17 ou un capot rigide parallèlement au disque 1 et ne tolérant la déformation de celui-ci que de quelques dixièmes de millimètre, comme représenté en 18 à la fig. 8.

Sur cette fig. 8, une collerette 10 a été représentée comme à la fig. 4, pour permettre l'arrivée de gaz qui entraîne le décollement, par l'intermédiaire des rainures 11.

Une autre possibilité pour faire obstacle à la déformation est de se servir d'un organe de pressage, du presseur lui-même s'il a été utilisé pour l'obtention du disque, que l'on maintiendra soit au contact soit près du disque.

Bien entendu, cet obstacle devra s'accommoder du système assurant l'étanchéité disque/matrice.

En utilisant un disque de 300 mm de diamètre, de 1,5 mm d'épaisseur, pour une hauteur de relief d'environ 0,1 μm, de bons résultats ont été obtenus avec une pression de gaz injecté de 1,5 bar, l'étanchéité et l'obstacle à la déformation étant assurés par un même plateau comportant des joints toriques en périphérie et près du centre. Le système d'injection est du type à collerette et l'ensemble est maintenu sous le presseur ayant servi au moulage du disque avec une force de l'ordre de 300 daN. On obtient alors le démoulage du disque dans un intervalle de temps de l'ordre de la seconde.

En fin de démoulage il est nécessaire de maintenir mécaniquement le disque après coupure de l'injection pour éviter tout nouveau contact du disque et de la matrice.

## Revendications

1. Procédé de démoulage de disque porteur d'informations sous la forme de microreliefs superficiels, ce disque (1) étant obtenu par moulage à la surface d'une matrice gravée (3); ce procédé étant caractérisé en ce qu'un gaz (6) est injecté entre ce disque (1) et cette matrice gravée (3) entraînant le décollement du disque (1) par rapport à cette matrice (3), le disque (1) étant maintenu en contact avec la matrice gravée (3) concentriquement de part et d'autre de la zone gravée.

2. Procédé selon la revendication 1, un agent moulant (2) ayant été introduit lors du moulage entre le disque (1) et la matrice (3), caractérisé en ce qu'un gaz (6) est injecté entre cet agent moulant (1) et cette matrice gravée (3).

3. Dispositif comportant un plateau (25) et un nez de centrage (20) sur lequel est positionnée une matrice gravée (3) pour la mise en œuvre du procédé selon l'une des revendications 1 ou 2, caractérisé en ce qu'il comprend des moyens d'introduction du gaz et des moyens de maintien du contact entre le disque (1) et la matrice gravée (3), concentriquement de part et d'autre de la zone gravée.

4. Dispositif selon la revendication 3, caractérisé en ce que ces moyens d'introduction du gaz comprennent une collerette en forme de couronne comportant une buse d'injection de gaz positionnée en périphérie du disque (1) au moment du moulage.

5. Dispositif selon la revendication 3, caractérisé en ce que ces moyens d'introduction du gaz comprennent une buse d'injection de gaz traversant la matrice (3) ou le disque (1) en une zone non gravée.

6. Dispositif selon la revendication 3, caractérisé en ce que ces moyens d'introduction du gaz comprennent des buses permettant l'injection de gaz situées dans le nez de centrage (20).

7. Dispositif selon la revendication 3, caractérisé en ce que ces moyens d'introduction du gaz comprennent une collerette (10) située sur le nez de centrage (20) intercalée entre le disque (1) et la matrice (3) au moment du moulage, des rainures (11) étant ménagées dans cette collerette pour permettre l'injection de gaz.

8. Dispositif selon la revendication 3, caractérisé en ce que ces moyens d'introduction du gaz comprennent une collerette rapportée entre le disque et la matrice gravée, cette collerette comportant une buse d'injection de gaz.

9. Dispositif selon la revendication 3, caractérisé en ce que le nez de centrage (20) est mobile en translation dans la direction de l'axe de symétrie (Δ), ce qui permet de soulever le disque (1) et de dégager des buses d'injection de gaz (22).

10. Dispositif selon la revendication 3, caractérisé en ce que ces moyens de maintien du disque (1) en contact avec la matrice gravée (3) sont constitués par deux anneaux de maintien (7, 8) concentriques.

11. Dispositif selon la revendication 3, caractérisé en ce que ces moyens de maintien du contact entre le disque (1) et la matrice gravée (3) limitent la déformation du disque lors du décollement grâce à un plateau (17) disposé au-dessus du disque.

## Patentansprüche

1. Verfahren zum Ablösen einer Informationen in Form oberflächlicher Mikroreliefs tragenden Scheibe (1) von der Oberfläche einer gravierten Matrix (3) nach der Scheibenherstellung durch Giessen, dadurch gekennzeichnet, dass ein Gas (6) zwischen die Scheibe (1) und die gravierte Matrix (3) hineingedrückt wird, wodurch die Scheibe (1) von der Matrix (3) abhebt und zugleich mit der gravierten Matrix (3) konzentrisch zu beiden Seiten der gravierten Zone in Kontakt bleibt.

2. Verfahren nach Anspruch 1, bei dem ein Gussagens (2) beim Giessen zwischen die Scheibe (1) und die Matrix (3) eingebracht worden war, dadurch gekennzeichnet, dass ein Gas (6) zwischen dieses Gussagens (1) und die gravierte Matrix (3) hineingedrückt wird.

3. Vorrichtung mit einer Platte (25) und einer Zentriernase (20), auf der eine gravierte Matrix (3) angeordnet ist, zur Durchführung des Verfahrens nach einem beliebigen der Ansprüche 1 oder 2, dadurch gekennzeichnet, dass sie Mittel zum Einleiten des Gases und Mittel aufweist, mit denen der Kontakt zwischen der Scheibe (1) und der gravierten Matrix (3) konzentrisch zu beiden Seiten der gravierten Zone aufrechterhalten wird.

4. Vorrichtung nach Anspruch 3, dadurch gekennzeichnet, dass diese Gaseinlassmittel einen kronenförmigen Kragen mit einer Gaseinlassdüse aufweisen, die während des Giessens am Rand der Scheibe (1) angeordnet ist.

5. Vorrichtung nach Anspruch 3, dadurch gekennzeichnet, dass die Gaseinlassmittel eine Gaseinlassdüse aufweisen, die die Matrix (3) oder die Scheibe (1) in einer nicht gravierten Zone durchquert.

6. Vorrichtung nach Anspruch 3, dadurch gekennzeichnet, dass die Gaseinlassmittel Düsen enthalten, die eine Gasinjektion erlauben und in der Zentriernase (20) angeordnet sind.

7. Vorrichtung nach Anspruch 3, dadurch gekennzeichnet, dass die Gaseinlassmittel einen Kragen (10) aufweisen, der in der Zentriernase (20) liegt und zwischen die Scheibe (1) und die Matrix (3) während des Giessens eingefügt ist, wobei Rillen (11) in diesem Kragen für die Gasinjektion vorgesehen sind.

8. Vorrichtung nach Anspruch 3, dadurch gekennzeichnet, dass die Gaseinlassmittel einen Kragen enthalten, der zwischen der Scheibe und der gravierten Matrix angebracht ist und eine Gasinjektionsdüse enthält.

9. Vorrichtung nach Anspruch 3, dadurch gekennzeichnet, dass die Zentriernase (20) in Richtung der Symmetrieachse (Δ) beweglich ist, so dass es möglich ist, die Scheibe (1) anzuheben und Gasinjektionsdüsen (22) freizulegen.

10. Vorrichtung nach Anspruch 3, dadurch gekennzeichnet, dass die Mittel, mit denen die Scheibe (1) mit der gravierten Matrix (3) in Kontakt gehalten wird, aus zwei konzentrischen Halteringen (7, 8) besteht.

11. Vorrichtung nach Anspruch 3, dadurch gekennzeichnet, dass die Mittel, mit denen die Scheibe (1) und die gravierte Matrix (3) in Kontakt gehalten werden, die Verformung der Scheibe während des Ablösens mit Hilfe einer oberhalb der Scheibe angebrachten Platte (17) begrenzen.

**Claims**

1. A method for demoulding a disk which carries informations in the form of superficial microreliefs, this disk (1) being obtained by a moulding process on the surface of an engraved matrix (3), the method being characterized in that a gas (6) is injected between said disk (1) and said engraved matrix (3) and makes the disk (1) lift off from the matrix (3), the disk being concentrically kept in contact with the engraved matrix (3) on both sides of the engraved zone.

2. A method according to claim 1, a moulding agent (2) having been inserted during the moulding process between the disk (1) and the matrix (3), characterized in that a gas (6) is injected between said moulding agent (1) and said engraved matrix (3).

3. A device comprising a plate (25) and a center pin (20) on which an engraved matrix (3) is located for realizing the method according to any one of claims 1 or 2, characterized in that it comprises gas introduction means and means for keeping in contact the disk (1) and the engraved matrix (3) concentrically on both sides of the engraved zone.

4. A device according to claim 3, characterized in that these gas introduction means comprise a crown-shaped collar including a gas injection nozzle which is located at the periphery of the disk (1) during the moulding process.

5. A device according to claim 3, characterized in that these gas introduction means comprise a gas injection nozzle passing through the matrix (3) or the disk (1) in a zone which is not engraved.

6. A device according to claim 3, characterized in that these gas introduction means comprise nozzles allowing the injection of gas and situated in the center pin (20).

7. A device according to claim 3, characterized in that the gas introduction means comprise a collar (10) which is located on the center pin (20) and inserted between the disk (1) and the matrix (3) during the moulding process, grooves (11) being cut into said collar for allowing the injection of gas.

8. A device according to claim 3, characterized in that said gas introduction means comprise a collar which is applied between the disk and the engraved matrix and which includes a gas injection nozzle.

9. A device according to claim 3, characterized in that the center pin (22) is movably arranged in the direction of the axis of symmetry (Δ), thus allowing to lift the disk (1) and to free the gas injection nozzle (22).

10. A device according to claim 3, characterized in that said means for maintaining the contact between the disk (1) and the engraved matrix (3) are constituted by two concentric hold rings (7, 8).

11. A device according to claim 3, characterized in that said means keeping the disk (1) in contact with the engraved matrix (3) limit the deformation of the disk during the lift off due to a plate (17) which is located above the disk.

FIG.1

FIG.2

7

# FIG.3

# FIG.4

# FIG.5

# FIG. 6

# FIG. 7

# FIG. 8